(19) Europäisches Patentamt

European Patent Office

Office européen des brevets

(11) **EP 0 987 883 A1**

(12) **EUROPEAN PATENT APPLICATION**

(43) Date of publication:
22.03.2000 Bulletin 2000/12

(51) Int. Cl.$^7$: **H04N 5/217**

(21) Application number: **98830537.1**

(22) Date of filing: **15.09.1998**

(84) Designated Contracting States:
**AT BE CH CY DE DK ES FI FR GB GR IE IT LI LU MC NL PT SE**
Designated Extension States:
**AL LT LV MK RO SI**

(71) Applicant: **DATALOGIC S.P.A.**
**I-40012 Lippo di Calderara di Reno (Bologna) (IT)**

(72) Inventor: **Infriccioli, Stefano**
**40125 Bologna (IT)**

(74) Representative:
**Cerbaro, Elena, Dr. et al**
**STUDIO TORTA S.r.l.,**
**Via Viotti, 9**
**10121 Torino (IT)**

(54) **Method and device for reducing the noise generated in a light sensor**

(57)  The method for reducing the noise generated in a light sensor supplying an initial electrical signal (x(t)) of periodic type, comprising a useful zone (U), a reset zone (R) and a reference zone (B), comprises delaying said initial electrical signal (x(t)) to obtain a delayed electrical signal (x(t-τ)), subtracting the delayed electrical signal (x(t-τ)) from the initial electrical sign (x(t)), to obtain a difference signal having redundant portions and limiting the output signal at one of the redundant portions, through a clamping diode (24). The output signal is then limited as regards at least some of the unnecessary components and has a reduced amplitude, thus making it possible to increase the dynamics of the useful portion.

Fig.7

**Description**

The present invention relates to a method and a device for reducing the noise generated in a light sensor.

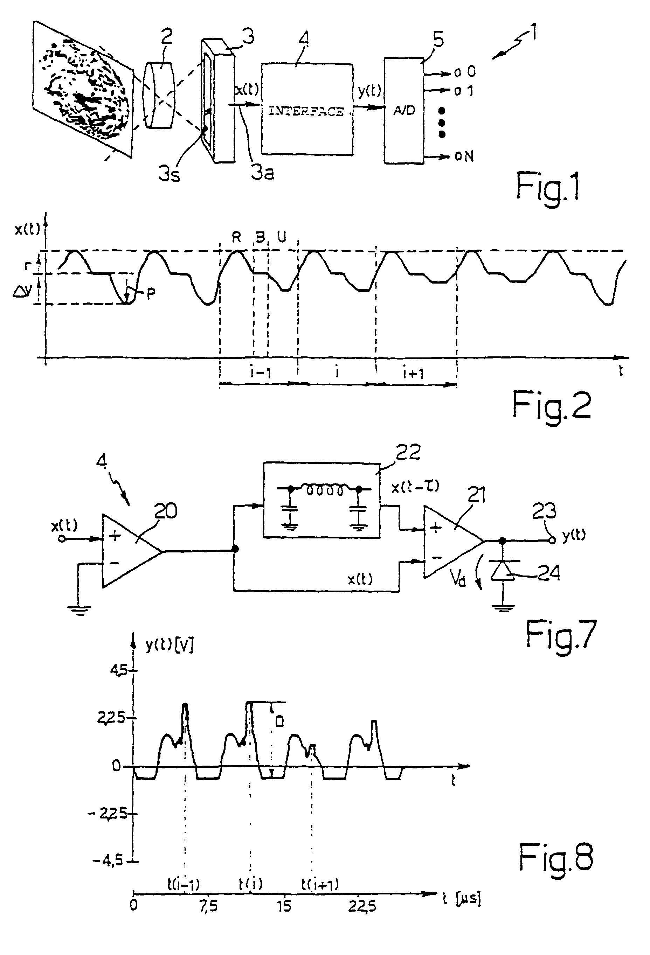

Image acquisition systems are known based on the use of CCD (Charge Coupled Device) or CMOS sensors, of the linear or matrix type (digital telecameras). A general diagram of a known system is shown in figure 1, wherein the acquisition system (generally indicated at 1) comprises an optical unit 2; a sensor 3, for example of CCD type, an interface 4 and an A/D converter 5. In the acquisition system 1, the optical unit 2 (generally constituted by a lens system) has the aim of focussing the image on the sensitive surface 3s of sensor 3 and the interface 4 has the task of making the output of sensor 3 electrically compatible with the input of the A/D converter 5; the latter then transforms the signal (which is of an analog type) into a succession of digital pulses (bit o0, o1, ..., oN), sampling the signal supplied by the interface 4 at appropriate moments, using synchronism signals (not shown) which are common with the sensor 3.

The sensitive surface 3s of the sensor 3 comprises a plurality of sensitive areas which can convert the received photons into electrons. The image is acquired in two steps, i.e. a first step in which each sensitive area of the sensor receives the light and the longer this step is, the more photons are converted into electrons; and a second step in which the charge packets formed in each sensitive area are extracted and then associated with each image or picture element (pixel). In order to speed up the operation, while an image is being formed, the previous image is being extracted. The load packets are then transformed by an appropriate internal buffer into a voltage signal x(t).

Figure 2 shows a generic signal x(t) supplied to output 3a of sensor 3; in particular the figure points out the portions corresponding to three pixels, indicated as i-1, i and i+1; each portion in turn consists of three parts, i.e. a first part representing the reset signal (reset zone R, corresponding to the period of time when the buffer is discharged from the i-th charge packet); a second part representing the value of a black pixel (black reference zone B); and a third part representing the useful signal (useful zone U). In particular, the brightness information is provided by the voltage difference $\Delta V$ between the black reference and the level indicated as "p"; the value of this voltage difference $\Delta V$ is thus variable for each pixel; on the other hand, the reset part has a peak "r" which is constant whilst the sensor is functioning.

Consequently, the more bright a point of the acquired image, the greater the number of the electrons of the packet associated with it and the greater the voltage difference $\Delta V$: on the other hand if a point is completely black, the charge packet is empty and the voltage difference $\Delta V$ is equal to zero.

Interface 4 has the task of processing the signal supplied to output 3a of sensor 3, in order to extract the required image data; this processing is essential if sensor 3 is of the high-speed and high-resolution type, in case of badly-lit scenes and when, for mechanical reasons, sensor 3 must be connected to interface 4 with wires of a significant length. In fact, in all these cases, there is a substantial deterioration in the signal/noise ratio at the input of the interface 4, since only part of the variation of the output signal is used; in addition, in the case of long wires, the captured electro-magnetic noise becomes significant.

Interface 4 must then be able to carry out the following tasks:

1. restore the black level ("DC restoring");
2. invert the signal associated with the charge packet;
3. make the signal compatible with the voltage values required by the A/D converter; and
4. eliminate the (thermal and electromagnetic) noise.

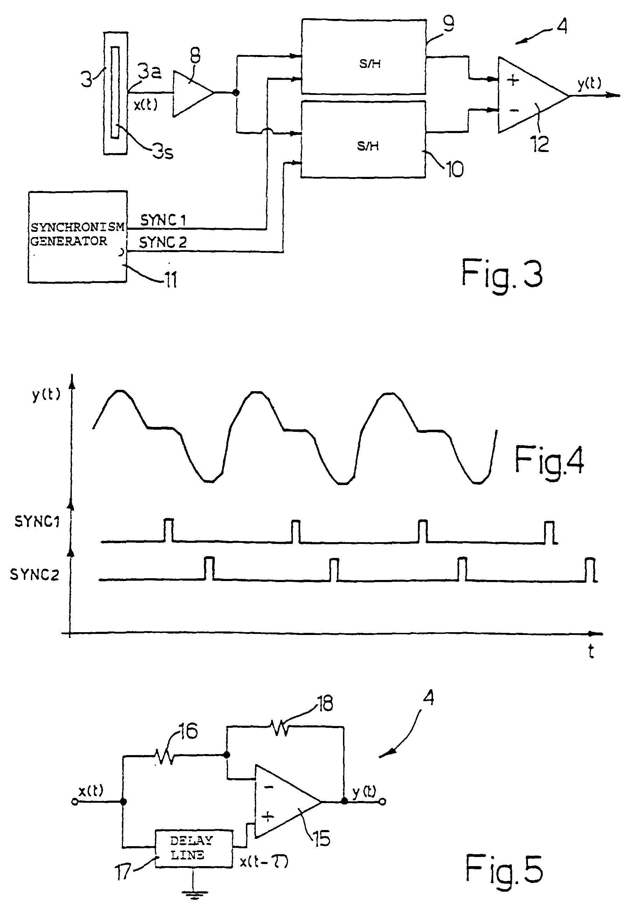

In general, the first task is carried out by providing the interface 4 with a stage storing the level of a given number of black pixels at the start or at the end of an image. This technique has limits if the duration of the image is not fixed and/or the image is lengthy, since the memory stage (in general using a capacitor) can be discharged and lose the black level. The second and third tasks are carried out by an appropriate amplifier stage. In order to carry out the fourth task (which is particularly difficult in case of a poorly lit environment, wherein the electrons derived from the photon/electron conversion are few or comparable with those derived from thermal generation inside the sensor), a technique has been proposed, the diagram of which, shown in figure 3, is known as CDS (Correlated Double Sampling).

In detail, with reference to figure 3, after signal x(t) supplied by sensor 3 has been amplified in a buffer 8, it is supplied to two sample and hold circuits 9, 10, which are controlled by a synchronism generator 11; the output of the sample and hold circuits 9, 10 is supplied to a differential amplifier 12. In practice, as shown by the waveforms of figure 4, the sample and hold circuits 9, 10 sample the signal x(t) at the black reference and the useful signal; the differential amplifier 12 then subtracts the black reference from the useful signal.

The operation of the circuit in figure 3 is based on the principle that if the heat-generated electrons adversely affect the pixel voltage level, they also behave in the same way with the black reference level, so that by subtracting one of the two signals sampled by the sample and hold circuits 9, 10 from the other, the noise can be reduced.

However the circuit in figure 3 has various disadvantages:

•    it is slow (at a high speed it becomes virtually unusable);

- it is expensive;
- it consumes a lot of energy; and
- it is bulky.

In order to solve these problems, a circuit has been proposed based on the principle of calculating the difference between signal x(t) and its delayed replica. This solution is shown in figure 5, wherein signal x(t) is supplied to the inverting input of an operational amplifier 15, through a resistor 16 and to the non-inverting input of operational amplifier 15 itself through a delay line 17. A feedback resistor 18 connects the output of the operational amplifier 15 to its inverting input. Downstream from the differential amplifier 12 a sample circuit (not shown), controlled by a synchronism signal also used in sensor 3, samples the output signal y(t) at one of the peaks corresponding to the useful zone U.

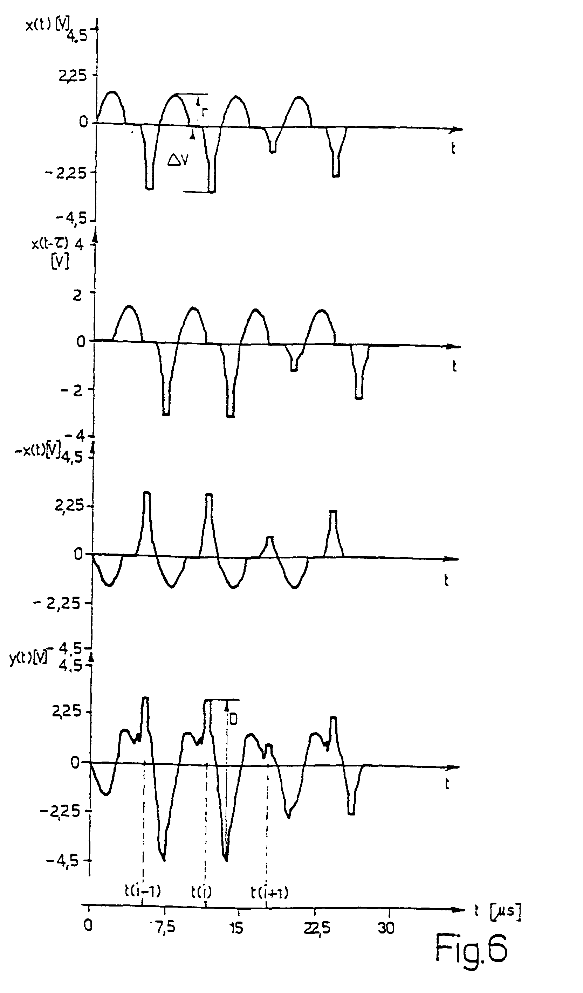

The waveforms for the circuit of figure 5 are shown in figure 6, wherein signal y(t) has been calculated as follows:

$$y(t) = x(t - \tau) - x(t) = x(t - \tau) + [- x(t)]$$

and sampling is carried out in three successive periods indicated at $t(i-1)$, $t(i)$ and $t(i + 1)$.

In the solution of figure 5, in each period the output signal y(t) comprises two different portions which contain the same information, duplicated unnecessarily. Consequently the output signal y(t) has a dynamic (peak-to-peak variation) $D = \Delta V + r$, wherein r is the voltage level during the reset step, increased considerably with respect to the original signal. This is particularly disadvantageous when acquiring the image of quickly moving objects or in poorly lit environment, or when variation $\Delta V$ is comparable to, or small with respect to r. In fact, in this case, it is necessary to considerably amplify the signal; furthermore, amplification is limited by the fact that peak value $2\Delta V + r$ must not saturate the amplifier circuits.

The object of the invention is thus to provide a method for reducing the noise generated in the sensor device, which eliminates the problems of the known solutions and makes it possible to extract the useful information through a circuital simple solution, which is inexpensive and also operates satisfactorily in conditions of relatively poor lighting and/or high-speed images. A further object of the invention consists of providing an interface for a light sensor device.

According to the present invention, a method is provided for reducing the noise generated in a light sensor supplying an initial electrical signal of periodic type, comprising a useful zone, a reference zone and a reset zone, the method comprising the steps of delaying the initial electrical signal to obtain a delayed electrical signal and generating an output signal proportional to the difference between said initial electrical signal and said delayed electrical signal, said output signal comprising redundant portions correlated to said useful zone and/or to said reset zone, characterised by the step of limiting the amplitude of at least one portion of at least one of said output signal, said initial signal and said delayed signal.

In the output signal y(t) in figure 6, both the reset zone and the useful zone contribute twice to the output signal and thus form redundant portions of the output signal; thus, by limiting the amplitude of at least one portion of the output signal, the initial signal or the delayed signal, at least one of the unnecessary contributions (one of the two useful zones and/or at least one of the two reset zones) is eliminated from the output signal.

According to a first possibility, the output signal is clipped by means of a half-wave rectifier (thus eliminating one of the two useful zones and one of the two reset zones); as an alternative, the delayed electrical signal is clipped by a half-wave rectifier (thus eliminating only one of the two reset zones).

On the other hand, to eliminate the reset zone of the initial electrical signal (and thus both the reset zones from the output signal), the initial electrical signal is clipped by a half-wave rectifier.

The invention also relates to a device for reducing the noise generated in a light sensor, receiving an initial electrical signal of a periodic type, comprising a useful zone, a reference zone and a reset zone, said device comprising a delay stage, receiving said initial electrical signal and generating a delayed electrical signal and a differentiating stage, receiving said initial electrical signal and said delayed electrical signal and generating an output signal proportional to the difference between said initial electrical signal and said delayed electrical signal, said output signal comprising redundant portions correlated to said useful zone and/or to said reset zone, characterised in that it further comprises limiting means for limiting the amplitude of at least one of said redundant portions of said output signal.

In particular, the limiting means comprises a diode connected between the output of the differentiating stage and the ground line; as an alternative the diode is interposed between the output of the delay stage and the ground line.

In order to eliminate both the reset zones of the initial signal, a diode is interposed between the signal input of the device and the ground line.

Further features of the invention will become apparent from the description of some preferred embodiments, provided purely by way of non-limiting example and illustrated in the attached drawings, wherein:

- figure 1 shows a block diagram of a known image acquiring system;
- figure 2 shows the plot of the output signal of a block of figure 1;

- figure 3 shows a block diagram of a known embodiment of a component of figure 1;
- figure 4 shows the plot of electrical quantities of the diagram of figure 3;
- figure 5 shows a block diagram of a different known solution;
- figure 6 illustrates the plot of some electrical quantities of the diagram of figure 5;
- figure 7 shows a simplified circuit scheme of a first embodiment of the invention;
- figure 8 shows the plot of the output voltage of circuit of figure 7;
- figure 9 shows a simplified circuit scheme of a second embodiment of the invention;
- figures 10a and 10b show the plots of quantities of the circuit of figure 9;
- figure 11 shows a simplified circuit scheme of a third embodiment of the invention;
- figures 12a and 12b show the plot of electrical quantities of the solution of figure 11;
- figure 13 shows a detailed circuit scheme of the third embodiment of the invention;
- figure 14 shows the plot of some electrical quantities of the solution of figure 13;
- figure 15 shows a circuit scheme of a simplified version of the circuit of figure 13;
- figure 16 shows the plot of some electrical quantities of the solution of figure 15; and
- figure 17 shows a block diagram of a different embodiment of the invention.

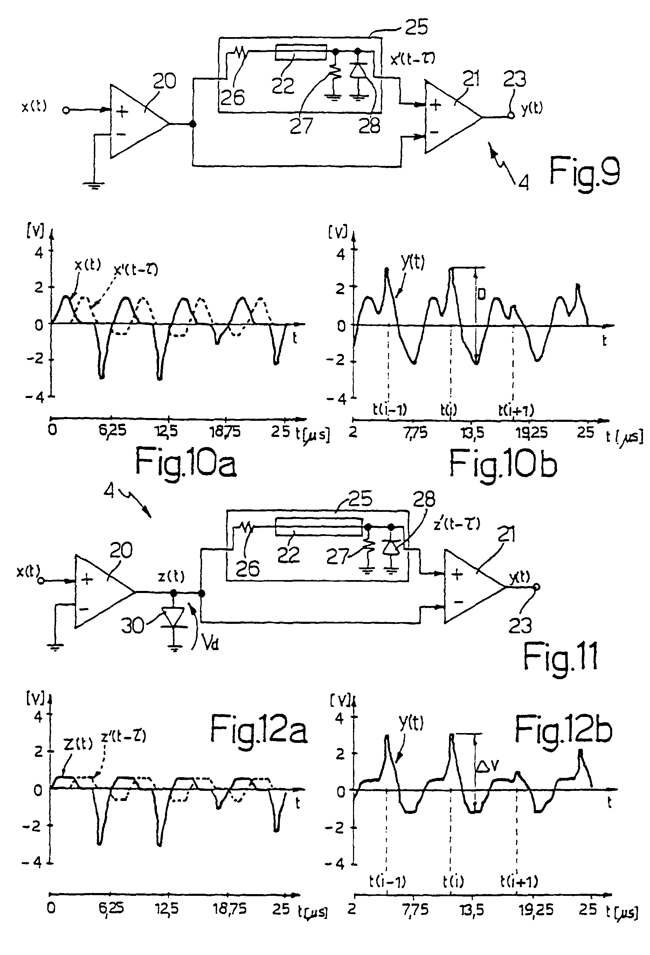

In figure 7, interface 4 comprises a first operational amplifier 20, the non-inverting input of which receives signal x(t) supplied by sensor 3 (figure 1) and the inverting input of which is connected to ground. The output of first operational amplifier 20 is connected directly to the inverting input of a second operational amplifier 21 and through a delay line 22, the electrical equivalent of which is shown, to the non-inverting input of second operational amplifier 21; a diode 24 has an anode connected to ground and a cathode connected to the output of second operational amplifier 21 and forming an output 23 of interface 4, supplying signal y(t). Delay line 22 can be manufactured in any known manner, for example through a wire portion or coaxial cable, or any structure for delaying an analog signal. Finally, downstream of operational amplifier 21, a signal sample circuit is provided, in a known manner, not shown.

In the circuit of figure 7, signal y(t) at the output 23 is obtained as the difference between delayed signal x(t - τ) and signal x(t), filtered by diode 24 which in practice eliminates virtually all the negative part of the signal. Thereby, signal y(t) cannot drop below voltage -Vd, wherein Vd is the threshold voltage of diode 24, as shown in figure 8. In practice, diode 24 operates as a clipping element, which cuts away a portion not useful (since duplicated) of the signal at the output of second operational amplifier 21. Signal y(t) generated by the circuit of figure 7 thus has a lesser dynamic D than the signal supplied by the aforementioned known circuit in figure 5. The times t(i-1), t(i) and t(i+1) in figure 8, as in figure 6 and in the successive figures 10, 12, 14 and 16, indicate the instant when signal y(t) is sampled.

In the embodiment of figure 9, wherein the elements common with the embodiment of figure 7 are indicated with the same reference numbers, the output of first operational amplifier 20 is still directly connected to the inverting input of second operational amplifier 21 and, through a delay and filtering stage 25, the electrical equivalent of which is shown, to the non-inverting input of second operational amplifier 21. The delay and filtering stage 25 comprises a first resistor 26, a delay line similar to delay line 22 and is thus indicated by the same reference number, a second resistor 27 and a diode 28. In detail, first resistor 26 and delay line 22 are in series to each other between the output of the first operational amplifier 20 and the non-inverting input of the second operational amplifier 21; the second resistor 27 and the diode 28 are in parallel to each other and are arranged between the output of delay line 22 and ground, with the anode of the diode 28 connected to ground.

The circuit of figure 9 generates at the output a signal equal to the difference between signal x(t), delayed and clamped and signal x(t) itself. In detail, diode 28 eliminates virtually all the negative part of the delayed signal supplied by delay line 22; signal x'(t-τ) supplied to the non-inverting input of the second operational amplifier 21 (shown in figure 10a as a broken line) thus comprises only the reset zone R and the black reference zone B of signal x(t) and not the useful zone U, relative to the information, which however is still present in signal x(t) which is supplied to the inverting input of the second operational amplifier 21; the output signal y(t), which is shown in figure 10b, therefore does not have any information duplicated and has a peak-to-peak voltage D which is lesser than the signal of figure 6.

In detail, the waveforms of figures 10a and 10b have been taken by setting the gain of second operational amplifier 21 to 1, as for all the waveforms shown in the appended drawings; consequently the peak-to-peak variation of the waveform of figure 10b appears to be comparable to, or even greater than that of figure 8; since in the circuit of figure 9 the redundant useful zone U (in the delayed signal) is eliminated before the second operational amplifier 21, the circuit of figure 9 makes it possible to use a gain which is greater than that usable with the circuit of figure 7, without saturating the second operational amplifier 21 and thus to improve the signal/noise ratio.

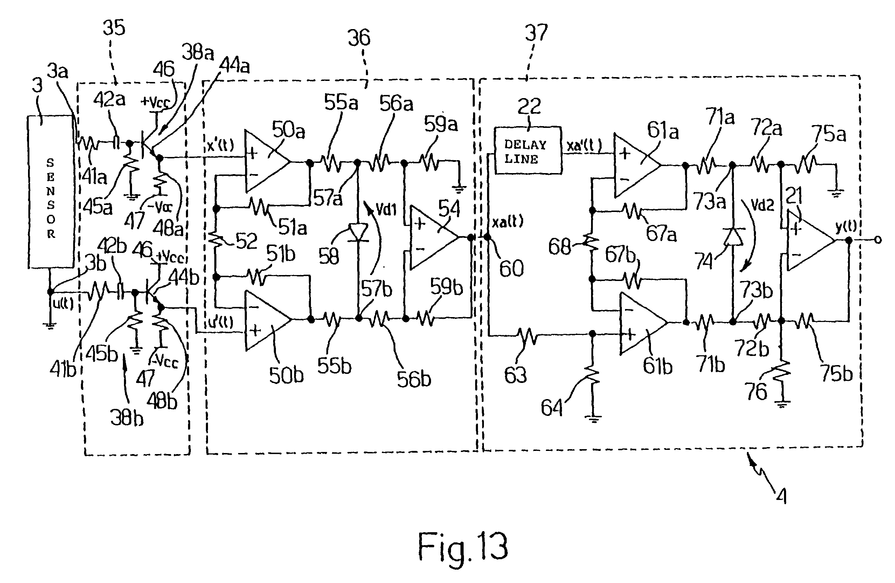

The circuit of figure 11 is similar to that of figure 9, except for a diode 30 is present at the output of the first operational amplifier 20; in particular, diode 30 has an anode connected to the output of the first operational amplifier 20 and a cathode connected to ground.

In the circuit of figure 11, diode 30 cuts the part of signal x(t) exceeding threshold voltage Vd, in practice leaving only the negative useful zone U and part of the black reference zone B and eliminating the reset zone R. The signal thus obtained, indicated at z(t), is supplied unaltered to the inverting input of the second operational amplifier 21; on the other hand to the non-inverting input of the second operational amplifier 21 a signal z'(t-τ) is supplied, which oscillates around the value of the black reference, since signal z(t) undergoes a delay and further clipping, which eliminates the negative part below value -Vd, as shown in figure 12a. Thus signal y(t) is obtained, as shown in figure 12b and having a peak-to-peak variation D which is determined in practice only by the dynamics of the useful zone U of the output signal x(t) of the sensor 3. In this case the maximum advantage is obtained from the point of view of the signal/noise ratio, since both the reset zones R (belonging to the input signal x(t)) and the redundant zone (belonging to the delayed signal) have been eliminated from the signal y(t) and so has the redundant useful zone U; in addition, filtering takes place upstream of the second operational amplifier 21, thus making it possible to increase further the gain of the latter.

As an alternative to the arrangement shown in figure 11, the diode 30 could be applied to the embodiment of figure 7, with the diode 24 connected to the output of the second operational amplifier 21. In this case, as previously described with reference to figure 11, diode 30 would clip the reset zone, whereas diode 24 would clip the negative peak, as previously described with reference to figure 7.

Figure 13 shows an overall embodiment of interface 4, including a first stage 35, arranged downstream of sensor 3, a second stage 36 arranged in cascade to the first stage 35 and a third stage 37, arranged in cascade to the second stage 36. In figure 13, the components identified by the same reference number and by letters "a" and "b" are equal to each other and define two signal substantially parallel paths, up to the final amplifier.

In detail, the first stage 35 comprises a first and a second filter circuit 38a, 38b, equal to each other, connected respectively to output 3a of sensor 3 and to the ground line (designated 3b) of sensor 3. Signal x(t) is available at the output 3a of sensor 3; ground line 3b has a high frequency noise u(t) generated by the driving circuits of sensor 3 and by all the electro-magnetic disturbances affecting ground line 3b. Each filter circuit 38a, 38b comprises a resistor, 41a, respectively 41b and a decoupling capacitor 42a, respectively 42b, connected to each other in series between the output terminal 3a, respectively the ground terminal 3b and the base terminal of an NPN transistor, 44a, respectively 44b. The resistor 41b has resistance which is equivalent to the sum of the resistance of resistor 41a and the resistance seen at the output terminal 3a of sensor 3. A resistor 45a, respectively 45b is interposed between the base terminal of the transistor 44a, respectively 44b and the ground line 3b. Transistor 44a, respectively 44b has a collector terminal connected to a first supply line 46, set to +Vcc and an emitter terminal connected to a second supply line 47 set to -Vcc, through a resistor 48a, respectively 48b.

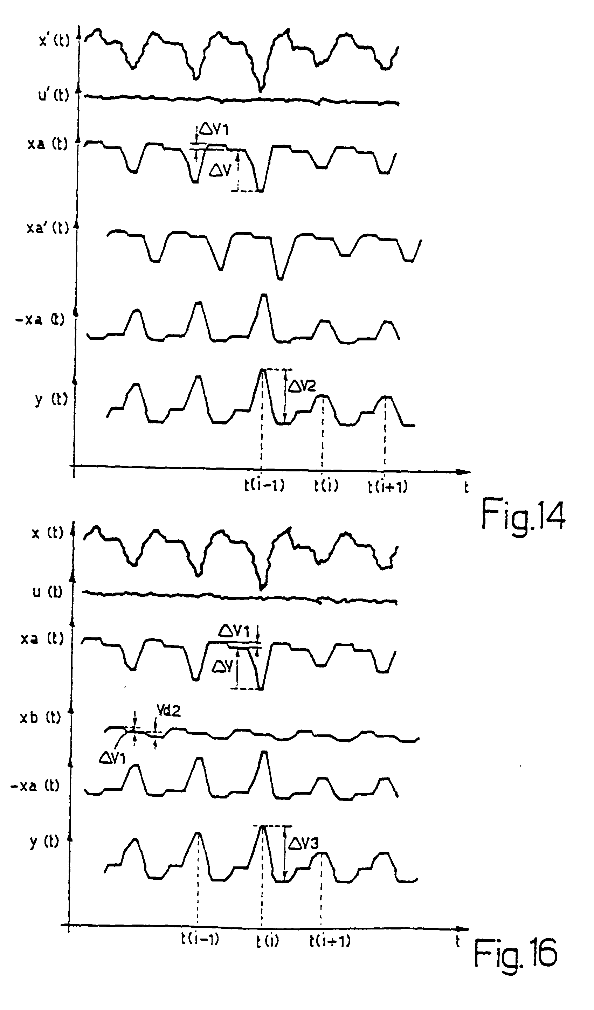

The emitter terminals of the transistors 44a, 44b supply at the output signals x'(t) and u'(t) shown in figure 14 and are connected to respective non-inverting inputs of a respective operational amplifier 50a, 50b, belonging to the second stage 36. Operational amplifiers 50a, 50b have an output connected to the respective inverting input through a resistor 51a, respectively 51b; the two inverting inputs of the operational amplifiers 50a, 50b are also connected to one another through a resistor 52. The output of operational amplifier 50a is connected to the non-inverting input of an operational amplifier 54 through two resistors 55a, 56a, which are disposed in series with one another and define an intermediate node 57a. Similarly, the output of operational amplifier 50b is connected to the inverting input of operational amplifier 54 through two resistors 55b, 56b, arranged in series with one another and defining an intermediate node 57b. A diode 58 is connected with its anode to the intermediate node 57a and with its cathode to the intermediate node 57b. A resistor 59a is connected between the non-inverting input of the operational amplifier 54 and the ground line 3a; a resistor 59b is connected between the non-inverting input and the output of the operational amplifier 54. The output of the operational amplifier 54 supplies a signal xa(t) shown in figure 14 and is supplied to an input node 60 of the third stage 37.

The third stage 37 comprises a pair of operational amplifiers 61a, 61b; in detail, the non-inverting input of operational amplifier 61a is connected to input node 60 through delay line 22, which is similar to that of figure 7; the non-inverting input of operational amplifier 61b is connected to input node 60 through a resistor 63 and to ground line 3b through a resistor 64. The operational amplifiers 61a, 61b have an output connected to the respective inverting input through a respective resistor, 67a, 67b; the two inverting inputs of operational amplifiers 61a, 61b are also connected to one another, through a resistor 68. The output of operational amplifier 61a is connected to the non-inverting input of operational amplifier 21 through two resistors 71a, 72a arranged in series to each other and defining an intermediate node 73a. Similarly, the output of operational amplifier 61b is connected to the inverting input of operational amplifier 21 through two resistors 71b, 72b arranged in series with one another and defining an intermediate node 73b. A diode 74 is connected to the anode at the intermediate node 73b and to the cathode at the intermediate node 73a. A resistor 75a is connected between the non-inverting input of operational amplifier 21 and ground line 3b; a resistor 75b is connected between the non-inverting input and the output of operational amplifier 21; finally, a resistor 76 is connected between the inverting input of operational amplifier 21 and ground line 3b. The output of the operational amplifier 21 supplies signal y(t) shown in figure 14.

In the circuit of figure 13, capacitors 42a, 42b eliminate the direct voltage present in the output signal x(t) and in the noise u(t) and decouple sensor 3 from the circuits downstream, in order to prevent damage to sensor 3, which is very delicate. Filter circuits 38a, 38b filter and amplify in the same manner the signal and noise, to permit elimination of noise u'(t) by the second stage 36.

As can be seen from the waveforms of figure 14, besides of eliminating the noise by subtracting it from the filtered and amplified signal x'(t), the second stage 36 amplifies the signal further and reduces the positive peak further to $\Delta V1 = Vd1(R59/R56)$, wherein Vd1 is the threshold voltage of diode 58, R59 is the resistance of resistors 59a, 59b and R56 is the resistance of resistors 56a, 56b. The input structure of second stage 36, with the operational amplifiers 50a, 50b, makes it possible in a known manner to increase the common mode rejection.

In the third stage, line 62 delays the signal xa(t) such as to make the black reference zone B of the signal x'a(t) coincide temporally with the useful zone of the signal xa(t); operational amplifier 21 subtracts the signal xa(t) from signal xa'(t), thus eliminating thermal noise and diode 74 eliminates one of the two peaks derived from the useful zone U of the signal. In addition, third stage 37 amplifies the overall signal, such as to obtain dynamics $\Delta V2 = \Delta V + Vd2(R75/R72)$, wherein $\Delta V$ is the voltage difference between the black reference level and the peak level of the useful zone U, Vd2 is the threshold voltage of diode 74, R75 is the resistance of resistors 75a, 75b and R72 is the resistance of resistors 72a, 72b.

The signal y(t) at the output of the circuit of figure 13 can be substantially amplified, by suitable dimensioning the components of the third stage 37, such as to eliminate thermal noise, without saturating any of the amplifiers.

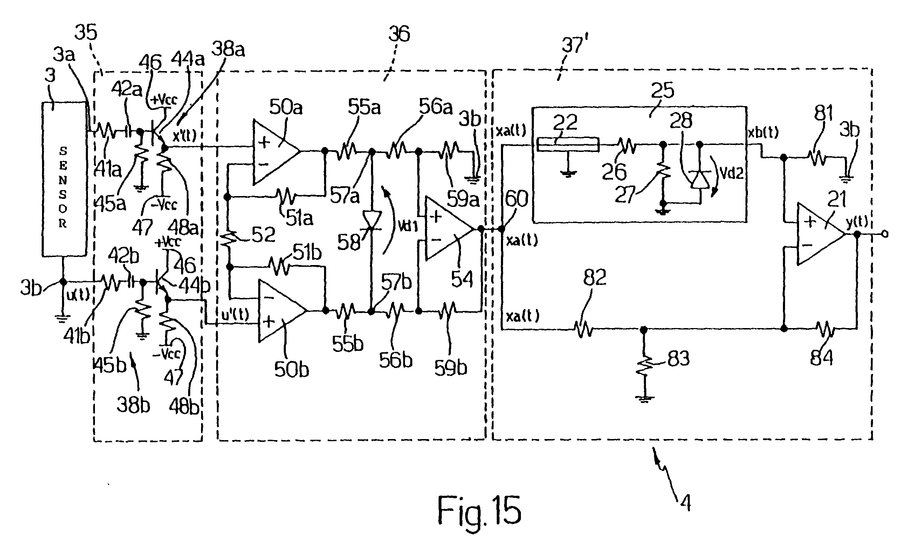

Figure 15 shows a simplified embodiment with respect to figure 13. In detail, the circuit of figure 15 comprises a first and a second stage similar to stages 35 and 36 of figure 13 and thus indicated with the same reference numbers and not described further here and a third, simplified stage 37'.

Third stage 37' comprises a delay and filtering stage 25 similar to that of figure 11 and thus not described further, arranged between input node 60 and the non-inverting input of operational amplifier 21; the non-inverting input of operational amplifier 21 is also connected to ground line 8b through a resistor 81. The inverting input of operational amplifier 21 is connected to input node 60 through a resistor 82, to ground line 3b through a resistor 83 and to its own output through a resistor 84. The output of operational amplifier 21 supplies the output signal y(t).

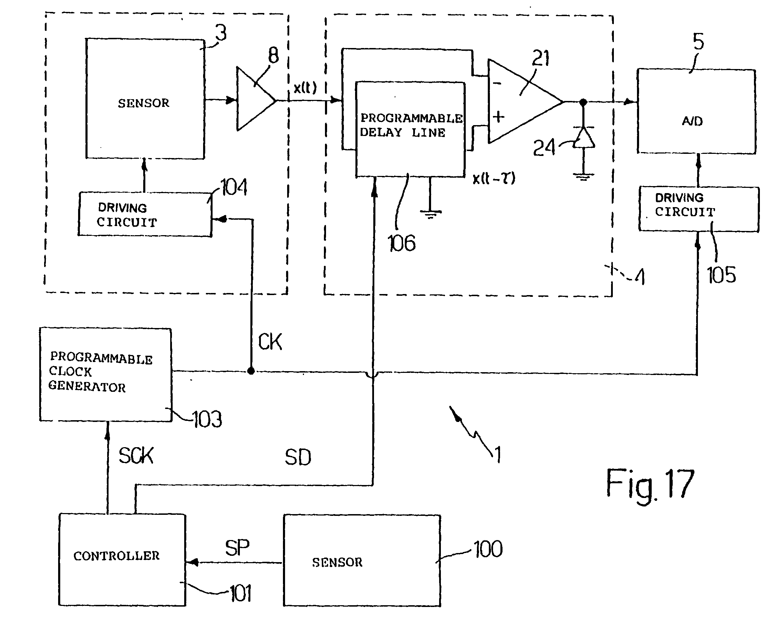

In the circuit of figure 15, first and second stages 35, 36 operate in the manner previously described with reference to figure 13 and third stage 37' delays and limits the signal xa(t) such as to eliminate the useful zone U, thus supplying a signal xb(t) at the non-inverting input of operational amplifier 21, as shown in figure 16 showing the plot of the signals in the circuit of figure 15. In particular, as shown, signal xb(t) oscillates around the black reference value and has a positive peak equivalent to $\Delta V1 = Vd1(R59/R56)$, like signal xa(t) previously discussed with reference to figure 14 and a negative peak equivalent to Vd2, wherein Vd2 is the threshold voltage of diode 28. The output signal y(t) thus has dynamics $\Delta V3 = \Delta V + Vd2 + \Delta V1$, which can be regulated as required, without saturating any of the amplifiers.

Figure 17 relates to the block diagram of an image acquisition system wherein the signal frequency is modified to take into account conditions of lighting and/or the movement speed of objects to be taken. In this case, it has been found advantageous to use a variable, adjustable or programmable delay line to adapt to the used signal frequency (in general, the greater the signal frequency, the lesser the delay of the signal to be subtracted). In detail, in figure 17, in addition to the elements previously described with reference to figure 1, acquisition system 1 comprises a sensor 100, measuring the lighting conditions and/or the movement speed of the objects to be taken and generating at the output a digital signal SP; a controller 101, receiving signal SP from sensor 100 and, for example using a stored map, calculating a system clock signal SCK and a delay signal SD; and a programmable clock generator 103, receiving at the input the system clock signal SCK and generating at the output clock signal CK for a driving circuit 104 of sensor 3 and for a driving circuit 105 of the A/D converter. Delay signal SD is supplied to a programmable delay line 106 belonging to an interface 4 having the structure of figure 7. The delay line 106 can be obtained for example using a plurality of coaxial lines with different delays, only one of which is connected, by suitable selectors controlled by signal SD, between the input of interface 4 and the non-inverting input of operational amplifier 21, such as to set the delay which is most suitable for the existing operative conditions. As an alternative, it is possible to use an analog or digital programmable delay line, of commercially available type.

In the diagram of figure 17, it is thus possible to regulate the delay of delay line 106 before acquiring an image (signal x(t)), for example when the acquisition system 1 is switched on.

The advantages of the described method and device are apparent from the preceding description. In particular, it is emphasised that the amplitude reduction obtainable by eliminating non-useful parts of the signals processed makes it possible to amplify these signals further, without any risk of saturation of the amplifiers; consequently it becomes possible to process optical signals even in the case of difficult ambient conditions, such as poor lighting, electromagnetic interference etc. Reduction of noise both at low frequency (thermal noise) and at high frequency, through the described filtering circuits (particularly in the complete solutions of figures 13 and 15), increases the signal/noise ratio and thus obtains useful information also in noisy ambient conditions.

The shown circuits comprise only components which are simple to produce and integrate, thereby the production costs are compatible with the planned applications. The described circuits are also reliable, durable and can also be used in light sensors operating at high speed. Finally, it is apparent that numerous modifications and variants can be made to the method and the device described and illustrated here, all of which come within the scope of the invention, as defined in the appended claims. In particular, it is emphasised that an adjustable or programmable delay line can be provided (similar to that shown in figure 17), also for the configurations of figures 9, 11, 13 and 15.

**Claims**

1. A method for reducing the noise generated in a light sensor supplying an initial electrical signal (x(t)) of periodic type, comprising a useful zone (U), a reference zone (B) and a reset zone (R), the method comprising the steps of delaying said initial electrical signal (x(t)) to obtain a delayed electrical signal (x(t-τ), x'(t-τ); (z'(t-τ); xa'(t-τ), xb(t-τ)) and generating an output signal (y(t)) proportional to the difference between said initial electrical signal and said delayed electrical signal, said output signal comprising redundant portions correlated to said useful zone and/or to said reset zone, characterised by the step of limiting the amplitude of at least one portion of at least one of said output signal (y(t)), said initial signal (x(t)) and said delayed signal (x(t-τ), x'(t-τ); (z'(t-τ); xa'(t-τ), xb(t-τ)).

2. A method according to claim 1, characterised in that said step of limiting comprises the step of half-wave rectifying said output signal (y(t)).

3. A method according to claim 1, characterised in that said step of limiting comprises the step of half-wave rectifying said delayed electrical signal.

4. A method according to claim 3, characterised in that said step of half-wave rectifying said delayed electrical signal is carried out before said step of generating an output signal (y(t)).

5. A method according to any one of claims 1 - 4, characterised in that said step of limiting comprises the step of half-wave rectifying said initial electrical signal.

6. A method according to claim 5, characterised in that said step of half-wave rectifying said initial electrical signal (x(t)), is carried out before said step of delaying.

7. A method according to any one of claims 1-6, characterised in that before said step of delaying, the step of regulating the delay is carried out.

8. A device (4) for reducing the noise generated in a light sensor, receiving an initial electrical signal (x(t)) of periodic type, comprising a useful zone (U), a reference zone (B) and a reset zone (R), said device (4) comprising a delay stage (22; 106), receiving said initial electrical signal and generating a delayed electrical signal (x(t-τ), x'(t-τ); (z'(t-τ); xa'(t-τ), xb(t-τ)) and a differentiating stage (21), receiving said initial electrical signal and said delayed electrical signal and generating an output signal (y(t)) proportional to the difference between said initial electrical signal and said delayed electrical signal, said output signal comprising redundant portions which to said useful zone and/or to said reset zone, characterised in that it further comprises limiting means (24; 28; 30; 58; 74) for limiting the amplitude of at least one portion of at least one out of said output signal (y(t)), said initial signal (x(t)) and said delayed signal (x(t-τ), x'(t-τ); z'(t-τ); xa'(t-τ), xb(t-τ)).

9. A device according to claim 8, characterised in that said limiting means comprises a first half-wave rectifier element (24) connected to the output of said differentiating stage (21).

10. A device according to claim 9, characterised in that said first half-wave rectifier element comprises a first diode (24), having an anode terminal connected to a reference potential line and a cathode terminal connected to the output of said differentiating stage (21).

11. A device according to claim 8, characterised in that said limiting means comprise a second half-wave rectifier element (28), connected to the output of said delay stage (22; 106).

12. A device according to claim 11, characterised in that said second half-wave rectifier element comprises a second diode (28) having an anode terminal connected to a reference potential line and a cathode terminal connected to the output of said delay stage (22; 106).

13. A device according to any one of claims 8-12, characterised in that said limiting means comprise a third half-wave rectifier element (30), connected to a signal input of said device (4).

**14.** A device according to claim 13, characterised in that said half-wave rectifier element comprises a third diode (30), have an anode terminal connected to said signal input and a cathode terminal connected to a reference potential line.

**15.** A device according to claim 8, characterised by a noise filtering stage (36) and a subtracting stage (37; 37') and in that said noise filtering stage (36) comprises:

- a first amplifier element (54) having a first input connected to said signal input (3a), a second input connected to an ground potential line (3b) and output (60) and
- a first diode element (58) interposed between said first and said second input of said first amplifier element (54); and in that said subtracting stage (37; 37') comprises:
- a second amplifier element (21) having a first input connected to said output (60) of said first amplifier element (54) and a second input connected to said output of said first amplifier element, through a delay stage (22; 25); and
- a second diode element (74; 28) connected to said second input of said second amplifier element (21).

**16.** A device according to claim 15, characterised in that said first diode element (58) has an anode terminal connected to said first input of said first amplifier element (54) and a cathode terminal connected to said second input of said first amplifier element (54) and in that said second diode element (74; 28) has a cathode terminal connected to said second input of said second amplifier element (21).

**17.** A device according to claim 15 or claim 16, characterised in that said first and second amplifier elements (54, 21) comprise each an operational amplifier.

**18.** A device according to any one of claims 15-17, characterised in that said noise filtering stage (36) further comprises a third and a fourth amplifier element (50a, 50b), said third amplifier element (50) being arranged between said signal input (3a) and said first input of said first amplifier element (54) and said fourth amplifier element (50b) being arranged between said ground potential line (3b) and said second input of said first amplifier element (54).

**19.** A device according to any one of claims 15-18, characterised in that said subtracting stage (37) further comprises a fifth and a sixth amplifier element (61b, 61a), said fifth amplifier element (61b) being arranged between said output (60) of said first amplifier element (54) and said first input of said second amplifier element (21) and said sixth amplifier element (61a) being arranged between said delay stage (22) and said second input of said second amplifier element (21) and in that said second diode element (74) has an anode terminal connected to said first input of said second amplifier element (21).

**20.** A device according to any one of claims 15-18, characterised in that said delay stage (25) of said subtracting stage (37') comprises a delay line (22), said second diode element (28) having an anode terminal connected to said ground line (3b).

**21.** A device according to any one of claims 15-20, characterised in that it further comprises a pre-filtering stage, comprising a first filter circuit (38a), arranged between said signal input and said first input of said first amplifier element (54) and a second filter circuit (38b), arranged between said reference potential line (3b) and said second input of said first amplifier element (54).

**22.** A device according to any one of claims 8-21, characterised in that said delay stage (106) has a variable delay.

**Fig.1**

**Fig.2**

**Fig.7**

**Fig.8**

## Fig. 3

## Fig. 4

## Fig. 5

Fig.6

Fig.9

Fig.10a

Fig.10b

Fig.11

Fig.12a

Fig.12b

Fig.13

EP 0 987 883 A1

Fig.14

Fig.16

Fig.15

Fig.17

European Patent
Office

**EUROPEAN SEARCH REPORT**

Application Number

EP 98 83 0537

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | EP 0 329 104 A (NIPPON ELECTRIC CO) 23 August 1989 * column 2, line 30 - column 3, line 13 * --- | 1,8 | H04N5/217 |
| A | US 5 471 244 A (WOLFE KENNETH I) 28 November 1995 * column 5, line 37 - line 45; figure 1 * --- | 1,8 | |
| A | PATENT ABSTRACTS OF JAPAN vol. 017, no. 192 (E-1350), 14 April 1993 & JP 04 339477 A (NEC CORP), 26 November 1992 * abstract * --- | 1,8 | |
| A | PATENT ABSTRACTS OF JAPAN vol. 098, no. 002, 30 January 1998 & JP 09 261542 A (FUJITSU GENERAL LTD), 3 October 1997 * abstract * ----- | 1,8 | |

| | | | TECHNICAL FIELDS SEARCHED (Int.Cl.6) |
|---|---|---|---|
| | | | H04N |

The present search report has been drawn up for all claims

| Place of search | Date of completion of the search | Examiner |
|---|---|---|
| THE HAGUE | 13 April 1999 | Bequet, T |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EP 0 987 883 A1

## ANNEX TO THE EUROPEAN SEARCH REPORT
## ON EUROPEAN PATENT APPLICATION NO.

EP 98 83 0537

This annex lists the patent family members relating to the patent documents cited in the above-mentioned European search report.
The members are as contained in the European Patent Office EDP file on
The European Patent Office is in no way liable for these particulars which are merely given for the purpose of information.

13-04-1999

| Patent document cited in search report | | Publication date | Patent family member(s) | | Publication date |
|---|---|---|---|---|---|
| EP 0329104 | A | 23-08-1989 | JP | 1208975 A | 22-08-1989 |
| | | | DE | 68920452 D | 23-02-1995 |
| | | | DE | 68920452 T | 31-08-1995 |
| | | | US | 4941052 A | 10-07-1990 |
| US 5471244 | A | 28-11-1995 | NONE | | |

For more details about this annex : see Official Journal of the European Patent Office, No. 12/82